# EUROPÄISCHE PATENTSCHRIFT

(11) **EP 2 867 595 B1**
(45) Veröffentlichungstag und Bekanntmachung des Hinweises auf die Patenterteilung: **09.01.2019**
(21) Anmeldenummer: 13714536.3
(22) Anmeldetag: 27.03.2013
(51) Int. Cl.: F24T 10/10

(54) **KOAXIAL-ERDWÄRMESONDE UND VERFAHREN ZUR MONTAGE EINER SOLCHEN ERDWÄRMESONDE IM UNTERGRUND**
COAXIAL GROUND HEAT EXCHANGER AND METHOD FOR INSTALLING SAID GROUND HEAT EXCHANGER IN THE GROUND
SONDE GÉOTHERMIQUE COAXIALE ET PROCÉDÉ DE MONTAGE D'UNE TELLE SONDE GÉOTHERMIQUE DANS LE SOUS-SOL

(30) Priorität: 14.05.2012 CH 681122012
(43) Veröffentlichungstag der Anmeldung: 06.05.2015
(73) Patentinhaber: Broder AG, 7320 Sargans (CH)
(72) Erfinder: BRODER, Mathias, CH-7320 Sargans (CH)
(74) Vertreter: Bohest AG Branch Ostschweiz
(86) Internationale Anmeldenummer: PCT/CH2013/000055
(87) Internationale Veröffentlichungsnummer: WO 2013/170389

(56) Entgegenhaltungen:
- WO-A1-00/36343
- WO-A2-2011/126359
- DE-A1- 4 329 269
- DE-U1-202004 007 567
- FR-A1- 2 918 086

## Beschreibung

Die Erfindung betrifft eine Koaxial-Erdwärmesonde gemäss dem Oberbegriff des Vorrichtungsanspruchs 1. Weiters betrifft die Erfindung auch ein Verfahren zur Montage einer erfindungsgemässen Koaxial-Erdwärmesonde im Untergrund gemäss dem Oberbegriff des unabhängigen Verfahrensanspruchs.

Die absehbare Verknappung fossiler Energieträger und die Notwendigkeit, die Emissionen von Luftschadstoffen und von CO₂ zu reduzieren, haben in der Wärmeproduktion zu einem Umdenken geführt und der Anwendung alternativer, erneuerbarer Energien, insbesondere von schadstofffreien Technologien, zu einer grösseren Akzeptanz verholfen. Eine besonders attraktive Form der Wärmeproduktion besteht in der Nutzung der Erdwärme. Erdwärme oder geothermische Energie ist die in Form von Wärme gespeicherte Energie unterhalb der Erdoberfläche. Bereits etwa 10 bis 20 m unter der Erdoberfläche weist das Erdreich eine über das ganze Jahr annähernd konstante Temperatur auf, die sich mit zunehmender Tiefe erhöht. Der natürliche Temperaturgradient des Erdreichs beträgt ca. 0.03 K / m Tiefe. Diese Temperatur wird vom Wärmefluss aus dem Erdinneren bestimmt. Die Wärmegewinnung erfolgt in der Regel mittels Erdwärmesonden, die in eine vertikale, dicht hinterfüllte Bohrung von üblicherweise 50 bis 350 m Tiefe eingebaut werden. Eine Erdwärmesonde übernimmt die Aufgabe, im Erdreich vorhandene sensible Wärmeenergie an ein in der Sonde zirkulierendes Wärmeträgermedium zu übertragen, das die Wärmeenergie aus dem Erdreich an die Oberfläche transportiert. Dort wird die Wärmeenergie in der Regel an ein zweites Wärmeträgermedium übertragen, das in einer Wärmepumpe zirkuliert.

Herkömmliche Erdwärmesonden sind meist als U-Rohrsonden ausgebildet, in denen das Wärmeträgermedium in einem Rohrast von der Oberfläche zum Grund der Erdwärmesondenbohrung, d.h. von oben nach unten, strömt. Im anderen Rohrast strömt das zirkulierende erwärmte Wärmeträgermedium vom Bohrlochgrund zur Oberfläche, d.h. von unten nach oben. Beim Aufsteigen gibt das Wärmeträgermedium immer einen Teil der akkumulierten Wärmeenergie an das im benachbarten Rohrast nach unten zirkulierende Wärmeträgermedium und an das umgebende kältere Erdreich ab. Infolge dieser unerwünschten Wärmeabgabe ist der exergetische Wirkungsgrad von U-Rohrsonden relativ bescheiden. Zur Verbesserung des Wirkungsgrades werden daher oft Koaxial-Erdwärmesonden eingesetzt. Das Wärmeträgermedium strömt bei Koaxial-Erdwärmesonden im äusseren Ringspalt von der Oberfläche zum Bohrlochgrund, wobei es die im Erdreich vorhandene sensible Wärmeenergie aufnimmt, und strömt durch ein zentrales Kernrohr wieder zurück nach oben an die Oberfläche. Wird bei solchen Koaxial-Erdwärmesonden das zentrale Kernrohr thermisch gedämmt, kann der exergetische Wirkungsgrad gegenüber den U-Rohrsonden deutlich gesteigert werden.

Während tiefreichende Koaxial-Erdwärmesonden mit gedämmtem Kernrohr gegenüber den anderen bekannten Arten von Erdwärmesonden einen grossen exergetischen Vorteil in Bezug auf die Qualität des verwertbaren Wärmestroms aufweisen, besitzen sie leider auch den Nachteil eines grossen Druckabfalls des Wärmeträgermediums. Dieser ist dadurch bedingt, dass ein grosser Teil des verfügbaren Querschnitts der Erdwärmesondenbohrung durch die Querschnittsfläche der Wärmedämmung des zentralen Kernrohrs, durch die relativ grosse Wandstärke des Hüllrohrs der Koaxial-Erdwärmesonde und insbesondere durch die nach dem Einbau der Sonde injizierte Verfüllungsschicht, beispielsweise eine Mischung aus Bentonit und Zement, zwischen dem Hüllrohr der Sonde und dem umgebenden Erdreich verloren geht. Die Netto-Querschnittsfläche für den Transport des Wärmeträgermediums wird dadurch stark reduziert.

Aus der WO 00/36343 A1 ist eine Koaxialerdwärmesonde bekannt, die ein zentrales Rohr und einen äusseren Mantel aufweist, der radial zwei stabile Lagen besitzt, nämlich eine kollabierte und eine expandierte Lage. Am Umfang des äusseren Mantel sind eine Reihe von axialen Kanälen ausgebildet, die von einem Wärmeträgermedium durchströmt werden können. Dabei kann sich der äussere Mantel aufweiten, bis er an der Bohrlochwandung anliegt. Das Wärmeträgermedium strömt durch die axialen Kanäle am Umfang des äusseren Mantels und im Kernrohr. Wegen des relativ kleinen Querschnitts der axialen Kanäle am Umfang resultiert daraus ein relativ hoher Druckabfall. Ein Ringspalt zwischen dem äusseren Mantel und dem Kernrohr dient zur Aufnahme von Grundwasser in der Bohrung.

In der DE 43 29 269 A1 ist eine Koaxialerdwärmesonde mit einem zentralen Kernrohr, das von einem dehnbaren Hüllrohr umgeben ist, beschrieben. Im gedehnten Zustand grenzt das Hüllrohr wenigstens bereichsweise an ein zusätzliches Schutzrohr an, dass in die Bohrung abgesenkt ist. Ein allfälliger Zwischenraum zwischen dem Hüllrohr und dem Schutzrohr muss mit Bentonit oder dgl. verfüllt werden.

In der DE 20 2004 007567 U1 ist eine Koaxialerdwärmesonde beschrieben, die ein als ein Wellrohr ausgebildetes Hüllrohr aufweist. Im eingebauten Zustand grenzt das Hüllrohr grenzt nicht an die Bohrlochwandung an. Der Spalt zwischen der Bohrlochwandung und dem Hüllrohr muss mit einer Ausgiessmasse (Bentonit) verfüllt werden.

In der WO 2011/126359 A2 ist ein Verfahren zum Einbringen einer Erdwärmesonde in eine Bohrung beschrieben. Unter anderem ist auch eine Koaxialerdwärmesonde erwähnt. Diese weist ein Hüllrohr auf, das im montierten Zustand nicht an der Bohrlochwandung anliegt. Der Ringspalt zwischen dem Hüllrohr und der Bohrlochwandung muss mit einer Ausgiessmasse verfüllt werden.

In der FR 2 918 086 A1 ist eine Koaxialerdwärmesonde beschrieben, deren Hüllrohr mit wendelförmig umlaufenden Schneiden versehen ist. Am vorderen Ende der Sonde ist ein Bohrkopf vorgesehen. Dadurch bildet die Koaxialerdwärmesonde zugleich das Bohrwerkzeug mit einem verlorenen Bohrkopf, mit dem die Bohrung erstellt wird. Das Hüllrohr muss eine hohe Eigensteifigkeit aufweisen, damit es die beim Bohren auftretenden Kräfte aufnehmen kann. Die Koaxialwärmesonde ist relativ umständlich handhabbar und wegen des verlorenen Bohrkopfes auch verhältnismässig teuer.

Aufgabe der vorliegenden Erfindung ist es daher, eine Koaxial-Erdwärmesonde zu schaffen, welche einen geringeren Druckabfall für das zirkulierende Wärmeträgermedium aufweist und eine höhere Aufnahme von Wärmeenergie des umgebenden Erdreichs in das Wärmeträgermedium erlaubt. Es soll auch ein Verfahren zur Montage einer erfindungsgemässen Koaxial-Erdwärmesonde im Erdreich geschaffen werden, welches möglichst einfach und kostengünstig durchführbar ist und den Auflagen von Umwelt- und Gewässerschutz Rechnung trägt.

Die Lösung dieser Aufgaben besteht in einer Koaxial-Erdwärmesonde mit einem zentralen Kernrohr und einem Hüllrohr, das einen sich vom Kernrohr radial nach aussen erstreckenden Ringspalt begrenzt, wobei das Kernrohr und der Ringspalt für eine Durchströmung mit einem fliessfähigen Wärmeträgermedium ausgebildet sind. Das Hüllrohr ist von einer durch einen erhöhten Innendruck expandierbaren, schlauchartigen Umhüllung gebildet, die das Kernrohr in zusammengefaltetem Zustand umgibt und nach dem Einbringen in die Erdwärmesondenbohrung durch ein mit Überdruck zugeführtes fliessfähiges Medium derart in eine stabile Endform bringbar ist, dass sie im eingebauten Zustand der Sonde unmittelbar an eine Wandung einer Erdwärmesondenbohrung angrenzt.

Das Grundkonzept der Erfindung besteht darin, eine Koaxial-Erdwärmesonde dahingehend zu modifizieren, dass im eingebauten Zustand der Sonde auf eine Hinterfüllung des Ringspalts zwischen der Wandung der Erdwärmesondenbohrung und dem Hüllrohr der Koaxial-Erdwärmesonde verzichtet werden kann. Die Koaxial-Erdwärmesonde ist derart ausgebildet, dass sie im eingebauten Zustand unmittelbar an die Bohrungswandung angrenzt. Dadurch wird der für den Transport des Wärmeträgermediums zur Verfügung stehende Strömungsquerschnitt der Koaxial-Erdwärmesonde deutlich vergrössert. Die im umgebenden Erdreich enthaltende Wärmeenergie wird direkt durch das Hüllrohr der Koaxial-Erdwärmesonde an das Wärmeträgermedium übertragen. Verluste durch das Material der Hinterfüllung, üblicherweise ein Bentonit-Zement Gemisch, werden dadurch vermieden. Das Hüllrohr ist von einer im Ausgangszustand zunächst zusammengefalteten schlauchartigen Umhüllung gebildet. Die schlauchartige Umhüllung wird durch das im zentralen Kernrohr und im Ringspalt mit Überdruck zirkulierende Wärmeträgermedium in eine stabile Endform entfaltet und gegen die Wandung der Erdwärmesondenbohrung gepresst, um zu verhindern, dass ggf. durchbohrte Wasserschichten hydraulisch miteinander verbunden werden. Die Expansionsfähigkeit und Elastizität der schlauchartigen Umhüllung erlauben es, diese ideal an die Wandung der Erdwärmesondenbohrung anzupressen, um dadurch einen möglichst guten Kontakt für die Wärmeenergieübertragung zu erzielen und zudem allfällig durchbohrte Wasserhorizonte zuverlässig abzudichten.

Eine Ausführungsvariante der Erfindung sieht vor, dass das Kernrohr und der Ringspalt für eine Durchströmung mit Wasser als Wärmeträgermedium ausgebildet sind. Der Einsatz von Wasser als Wärmeträgermedium stellt eine zusätzliche Sicherheit hinsichtlich Umwelt- und Gewässerschutz dar, da es selbst bei Leckagen zu keinen Kontaminationen kommen kann. Dies erlaubt den Einsatz der erfindungsgemässen Koaxial-Erdwärmesonde sogar in Gebieten, die bislang aus Gründen des Grundwasserschutzes als Sperrgebiete gelten.

Um die Montage der Koaxial-Erdwärmesonde in einer Erdwämesondenbohrung, die beispielsweise etwa 450 m beträgt und Tiefen von bis zu 1500 m erreichen kann, zu erleichtern, sieht eine weitere Ausführungsvariante der Erfindung vor, dass die schlauchartige Umhüllung das Kernrohr in zusammengefaltetem Zustand umgibt und nach dem Einbringen in die Erdwärmesondenbohrung durch ein mit Überdruck zugeführtes fliessfähiges Medium in eine stabile Endform expandierbar ist. Die expandierte Umhüllung erfüllt dabei zusätzlich die Funktion eines "Stents", der die Bohrung stabilisiert.

Indem in einer weiteren Ausführungsvariante der Erfindung die schlauchartige Umhüllung einen entfalteten Durchmesser aufweist, der grösser ist, als der Durchmesser der Bohrung, für welche die Erdwärmesonde vorgesehen ist, wird erreicht, dass die montierte und entfaltete bzw. expandierte Umhüllung, welche das Hüllrohr der Koaxial-Erdwärmesonde bildet, im vollständig gefüllten Zustand immer noch gegen innen leichte Falten aufweist, die in unregelmässiger Form entstehen. Diese Falten bewirkten eine zusätzliche Versteifung der Schlauchwand. Die zugleich auftretende Volumensverkleinerung des Ringspaltes ist hingegen nur gering und hat im Betrieb praktisch keinen Einfluss auf den Strömungswiderstand für das Wärmeträgermedium.

Es kann auch vorgesehen sein, dass die schlauchartige Umhüllung der Koaxial-Erdwärmesonde bei Überschreiten eines maximalen relativen Überdrucks gegenüber dem Wärmeträgermedium, insbesondere gegenüber Wasser, wenigstens bereichsweise begrenzt durchlässig ist. Dadurch wird verhindert, dass die Umhüllung bei der Expansion in Klüfte oder Kavitäten, die beim Erstellen der Erdwärmesondenbohrung gelegentlich durch grössere Materialausbrüche entstehen können, bricht. Kleinere Kavitäten werden durch das durch die äussere Hülle ausgepresste Wasser gefüllt. Bei leeren Klüften oder grösseren Kavitäten sorgt die überdruckbedingte Durchlässigkeit der Umhüllung gegenüber Wasser dafür, dass diese nur soweit expandiert wird, bis sie zuverlässig dichtend an der Bohrungswandung anliegt. Die Umhüllung wird dabei nur begrenzt in die Klüfte oder Kavitäten hinein ausgedehnt; eine Überdehnung des Materials wird dadurch verhindert. Das Material der Umhüllung ist dabei derart ausgebildet, dass der maximale relative Überdruck, der erreicht werden muss, bis Wasser durch die Umhüllung hindurch tritt, ca. 2 bar bis 3 bar beträgt. Die begrenzte Durchlässigkeit der Umhüllung gegenüber Wasser ist dabei zweckmässigerweise auf diejenigen Bereiche beschränkt, die sich im montierten Zustand der Erdwärmesonde im festen Erdreich, insbesondere im felsigen Untergrund, befinden. Der oberflächennähere Bereich, der an lockeres Erdreich angrenzt, ist zweckmässigerweise wasserundurchlässig ausgebildet. Da bei der Erstellung der Erdwärmesondenbohrung die Grenze zwischen lockerem Erdreich und felsigem Untergrund sehr genau ermittelbar ist, kann die Erdwärmesonde exakt auf die lokalen Gegenbenheiten angepasst werden.

In einer weiteren Ausführungsvariante der Koaxial-Erdwärmesonde sind das zentrale Kernrohr und die äussere schlauchartige Umhüllung integral miteinander verbunden und liegen sie als Endlos-Rollmaterial vor. Für das Einbringen in die erstellte Erdwärmesondenbohrung ist die Koaxial-Erdwärmesonde in der gewünschten Länge von einer Trommel abrollbar. An der Baustelle muss nur noch die angelieferte integrale Anordnung von Kernrohr und, vorzugsweise gefalteter, Umhüllung in die Erdwärmesondenbohrung eingebracht werden. Dazu wird die Koaxial-Erdwärmesonde einfach in der gewünschten Länge von einer Trommel abgerollt. Sollte die auf einer Trommel angeordnete Länge nicht ausreichen, kann vor oder während dem Einbringen in die Erdwärmesondenbohrung die erforderliche zusätzliche Länge der Erdwärmesonde von einer weiteren Trommel abgerollt und an den Endstellen dicht mit dem Ende des ersten Abschnitts verbunden werden, um auf die erforderliche Länge zu kommen.

Alternativ kann auch eine Koaxial-Erdwärmesonde vorgesehen sein, bei der das zentrale Kernrohr und die integral damit verbundene schlauchartige Umhüllung in abgelängten Abschnitten vorliegen. Die abgelängten Abschnitte sind beim Einbringen in die Erdwärmesondenbohrung flüssigkeitsdicht miteinander verbindbar. Diese Variante kommt insbesondere bei weniger flexiblen bzw. starren Sondenrohren zur Anwendung.

Bei einer weiteren Ausführungsvariante der Koaxial-Erdwärmesonde liegen das zentrale Kernrohr und die expandierbare schlauchartige Umhüllung getrennt voneinander vor. Dabei wird die Umhüllung von einem flachen Endlos-Rollenmaterial gebildet, das erst beim Einbringen des zentralen Kernrohrs mit diesem zusammengeführt wird, wobei die Längskanten der schlauchartigen Umhüllung miteinander flüssigkeitsdicht verbunden werden.

Die flüssigkeitsdichte Verbindung der Längsseiten des die schlauchartige Umhüllung bildenden Endlos-Rollenmaterials erfolgt beispielsweise durch Vernähen und/oder Verschweissen der aneinanderliegenden Bereiche in speziell dafür ausgebildeten Verbindevorrichtungen.

Die das Hüllrohr des Koaxial-Erdwärmesonde bildende schlauchartige Umhüllung ist mit Vorteil eine Kunststoffverbundfolie, die eine Wandstärke von etwa 3 mm bis zu 15 mm aufweisen kann. Eine Wandstärke von 3 mm reicht bei Längen bis ca. 450 m aus, um das Eigengewicht der Kunststoffverbundfolie zu tragen. Bei grösseren Längen der Koaxial-Erdwärmesonde wird entsprechend eine grössere Wandstärke für die schlauchartige Umhüllung gewählt. Die äussere Umhüllung nimmt nur wenig Volumen ein, weist jedoch im expandierten Zustand eine ausreichend grosse Eigenstabilität auf.

Eine Ausführungsvariante der Erfindung sieht vor, dass die Umhüllung eine Armierung aus einem Aluminium-Streckmetall aufweist, auf die beidseitig eine dehnbare Kunststoffmembran aufgebracht ist. Die Kunststoffmembran besteht beispielsweise aus einer dePolyethylen, Latex, Kautschuk oder dergleichen Materialien und ist mikroperforiert.

Das zentrale Kernrohr ist in einer bevorzugten Ausführungsvariante der Erfindung mit einer thermisch isolierenden Ummantelung umgeben. Die thermisch isolierende Ummantelung verhindert das das im Kenrrohr aufsteigende erwärmte Wärmeträgermedium seine Wärme zum Teil wieder an das im Ringspalt nach unten strömende Wärmeträgermedium abgibt. Dadurch kann der thermische Wirkungsgrad der Koaxial-Erdwärmesonde erhöht werden.

Bei dem erfindungsgemässen Verfahren zur Montage einer Koaxial-Erdwärmesonde im Erdreich wird, wie aus dem Stand der Technik bekannt, zunächst mit einer Bohrvorrichtung eine Erdwärmesondenbohrung erstellt. Die Tiefe der Bohrung beträgt beispielsweise 300 m bis 500 m und kann bis 1500 m erreichen. Danach wird eine erfindungsgemäss ausgebildete Koaxial-Erdwärmesonde in die vorbereitete Bohrung abgesenkt. Nach dem Einbringen der Koaxial-Erdwärmesonde wird eine zunächst zusammengefaltete schlauchartige Umhüllung, welche ein mit einer Isolation versehenes Kernrohr umgibt und zugleich die Begrenzungswandung eines Hüllrohrs der Koaxial-Erdwärmesonde bildet, in eine stabile Endform entfaltet und derart expandiert, dass sie im wesentlichen an der Bohrungswandung anliegt. Bei dem erfindungsgemässen Verfahren, wird die Koaxial-Erdwärmesonde derart in der Erdwärmesondenbohrung montiert, dass die schlauchartige äussere Umhüllung, die zugleich die Begrenzungswandung des Hüllrohrs der Koaxial-Erdwärmesonde bildet, unmittelbar an der Bohrungswandung anliegt. Dadurch wird ein Ringspalt zwischen der Begrenzungswandung des Hüllrohrs und der Bohrungswandung vermieden, der bei den Erdwärmesonden des Stands der Technik hinterfüllt werden muss. Somit entfällt bei dem erfindungsgemässen Verfahren der Injektionsschritt für das Füllmaterial, üblicherweise eine Mischung aus Bentonit und Zement. Der unmittelbare Kontakt zwischen der von der expandierten Umhüllung gebildeten Begrenzungswandung des Hüllrohrs mit der Bohrungswandung begünstigt die Übertragung der Wärmeenergie des Erdreichs an das in der Koaxial-Erdwärmesonde zirkulierende Wärmeträgermedium, das bei der vorliegenden Erfindung bevorzugt von Wasser gebildet ist. Durch das Entfallen der Hinterfüllungsschicht ist der für das zirkulierende Wärmeträgermedium zur Verfügung stehende Strömungsquerschnitt gegenüber den Erdwärmesonden des Stands der Technik deutlich vergrössert. Dadurch ergibt sich über die Länge der Koaxial-Erdwärmesonde ein geringerer Druckabfall, der sich unmittelbar vorteilhaft auf die Energiekosten für das Umpumpen des Wärmeträgermediums auswirkt.

Zum Einbringen der Koaxial-Erdwärmesonde in die Erdwärmesondenbohrung kann die zusammengefaltete äussere Umhüllung von einer sehr dünnen Folie umgeben sein. Die dünne Folie ist derart ausgebildet, dass sie bei einem relativ geringen Überdruck reisst und dann die Entfaltung der zunächst zusammengefalteten Umhüllung ermöglicht.

In einer Variante des erfindungsgemässen Verfahrens, erfolgt die Expansion der zusammengefalteten schlauchartigen Umhüllung der Koaxial-Erdwärmesonde mit Pressluft. Die zusammengefaltete Umhüllung wird dabei durch Pressluft, die vorzugsweise durch das zentrale Kernrohr der Koaxial-Erdwärmesonde mit Überdruck zugeführt wird, auf den vollen Durchmesser aufgeblasen. Am vorderen Ende des zentralen Kernrohrs ist eine regelbare Wärmequelle, vorzugsweise ein Infrarotstrahler, angeordnet. Das zentrale Kernrohr wird mit regelbarer Geschwindigkeit vom Bohrlochgrund bis zur Oberfläche gezogen, um die expandierte schlauchartige Umhüllung kurzzeitig zonenweise zu erwärmen. Infolge des Überdrucks und der geringeren Zähigkeit des Umhüllungsmaterials in der erwärmten Zone tritt eine plastische Deformation ein. Das Umhüllungsmaterial wird dabei in die kleinen Kavitäten der Bohrungswandung gedrückt. Infolge des thermischen Kontakts mit dem kälteren Erdreich kühlt das Umhüllungsmaterial unter seine kritische Fliesstemperatur ab und behält seine Form bei. Danach wird das Kernrohr wieder in seine ursprüngliche Position abgesenkt.

Um zu vermeiden, dass es im Bereich grösserer Kavitäten in der Bohrungswandung zu einer Überdehnung der expandierten Umhüllung kommt, sieht eine Variante der Erfindung vor, dass in der schlauchartigen Umhüllung Sensoren für die Messung der zonenweisen Dehnung bzw. Ausstülpung angeordnet sind. Bei Erreichen eines Grenzwertes wird die Verschiebegeschwindigkeit der Wärmequelle erhöht, d.h. die Wärmequelle schneller in Richtung der Oberfläche bewegt, um dadurch die plastische Deformation einzuschränken. Die in der Umhüllung angeordneten Sensoren erlauben somit eine Regelung der plastischen Deformation der Umhüllung. Dadurch wird eine Beschädigung der Umhüllung durch übermässige Ausbeulung vermieden.

Ein alternatives Verfahren zur Montage einer Koaxial-Erdwärmesonde im Erdreich sieht vor, dass die Expansion der zusammengefalteten schlauchartigen Umhüllung der Koaxial-Erdwärmesonde mit Wasser erfolgt, das von oben her in den Ringspalt zwischen dem zentralen Kernrohr und der gefalteten Umhüllung eingefüllt wird. Dieses Verfahren eignet sich insbesondere für Koaxial-Erdwärmesonden, bei denen Wasser als Wärmeträgermedium eingesetzt wird. Dabei kann das Wasser, das zunächst zur Expansion bzw. Entfaltung der schlauchartigen Umhüllung eingesetzt wird, danach auch als Wärmeträgermedium verwendet werden. Die Expansion der schlauchartigen Umhüllung erfolgt vom Bohrlochgrund her nach oben in Richtung der Oberfläche. Der Druck in tieferen Bereichen der Bohrung ist grösser als nach oben hin. Durch die Entfaltung und Volumenvergrösserung der schlauchartigen Umhüllung wird Wasser, das sich meist zwischen der Umhüllung und der Bohrungswandung befindet, in Richtung der Oberfläche gedrückt. Im Bereich von grösseren Kavitäten dehnt sich die Umhüllung weiter aus, und dringt teilweise in die Kavitäten ein. Da das Umhüllungsmaterial ab einem relativen Überdruck von 2 bar bis 3 bar teilweise durchlässig für das zugeführte Wasser ist, kann Wasser aus dem Inneren der Koaxial-Erdwärmesonde in die Kavität austreten. Dadurch wird eine übermässige Dehnung des Umhüllungsmaterials vermieden.

Eine Variante des Verfahren der Expansion mit Wasser sieht vor, dass nach dem vollständigen Füllen des zentralen Kernrohrs bis zur Oberfläche und einer Wartezeit der Druck auf die Wassersäule im zentralen Kernrohr kontinuierlich oder stufenweise bis zu einem Überdruck von etwa 12 bar bis etwa 15 bar erhöht wird. Die Wartezeit kann von einigen Minuten bis zu zwei Tagen dauern. Die Wartezeit ist erforderlich, damit kleinere Kavitäten in der Bohrungswandung vollständig mit Wasser, das durch die permeable Hülle austritt, gefüllt und die in den Kavitäten enthaltene Luft ausgepresst werden kann. Grössere Kavitäten oder leere Klüfte können naturgemäss nicht vollständig mit Wasser gefüllt werden. Hier genügt es, wenn die Umhüllung in einem begrenzten Ausmass in die Kavitäten oder Klüfte hinein ausgebeult wird. Der Überdruck wird eine Zeitlang aufrecht erhalten, um die Umhüllung im gewünschen Ausmass zu expandieren. Die Zeitspanne kann 30 s bis 1 ½ h betragen. Durch die anschliessende Druckerhöhung auf die Wassersäule im zentralen Kernrohr wird die schlauchartige Umhüllung noch fester gegen die Bohrungswandung gepresst. Die Falten werden geglättet oder teilweise zusammengepresst. Dadurch wird das Umhüllungsmaterial an diesen Stellen gereckt, d.h. plastisch verformt, ohne leck zu werden. Das inkompressible Wasser in den Kavitäten und die Durchlässigkeit der Umhüllung verhindern eine zu starke Deformation der Umhüllung. Ist der Druck des Wassers in den Kavitäten infolge einer Einpressung des Umhüllungsmaterials zu gross, kann Wasser durch das permeable Umhüllungsmaterial in den Ringraum zwischen zentralem Kernrohr und schlauchartige Umhüllung fliessen, um so den Druck wieder auszugleichen.

Eine erfindungsgemäss ausgebildete Koaxial-Erdwärmesonde mit einem zentralen Kernrohr, das mit einer wärmeisolierenden Ummantelung versehen ist, und einer aus einem ursprünglich zusammengefalteten Zustand in einen stabilen expandierten Zustand übergeführten schlauchartigen Umhüllung, die zugleich das Hüllrohr der Koaxial-Erdwärmesonde bildet und im montierten Zustand der Koaxial-Erdwärmesonde an einer Wandung einer Erdwärmesondenbohrung anliegt, eignet sich insbesondere für den Betrieb mit Wasser als Wärmeträgermedium. Wasser als Wärmeträgermedium hat den Vorteil, dass es auch bei einem gewollten oder ungewollten Austreten des Wärmeträgermediums aus der Koaxial-Erdwärmesonde zu keinen Kontaminationen kommen kann. Dadurch eignet sich die erfindungsgemässe Koaxial-Erdwärmesonde insbesondere auch für die Verwendung in Gebieten, die bislang aus Gründen des Grundwasserschutzes als Sperrgebiete gelten.

Weitere Vorteile und Merkmale der Erfindung ergeben sich aus der nachfolgenden Beschreibung von Ausführungsbeispielen unter Bezugnahme auf die schematischen Zeichnungen. Es zeigen in nicht massstabsgetreuer Darstellung:
- Fig. 1: das Prinzip einer Warmwasserzubereitung mit Erdwärmesonde des Stands der Technik;
- Fig. 2: eine Bohrung für eine Erdwärmesonde;
- Fig. 3: einen Querschnitt einer in einer Bohrung angeordneten Koaxial-Erdwärmesonde des Stands der Technik mit einem thermisch isolierten zentralen Kernrohr und einem Hüllrohr;
- Fig. 4: einen Querschnitt einer in einer Erwärmesondenbohrung angeordneten erfindungsgemässen Koaxial-Erdwärmesonde mit einem thermisch isolierten zentralen Kernrohr und einer expandierbaren schlauchartigen Umhüllung; und
- Fig. 5: eine schematische Darstellung einer in die Bohrung abgesenkten Koaxial-Erdwärmesonde mit partiell expandierter schlauchartiger Umhüllung zur Erläuterung des Montageverfahrens.

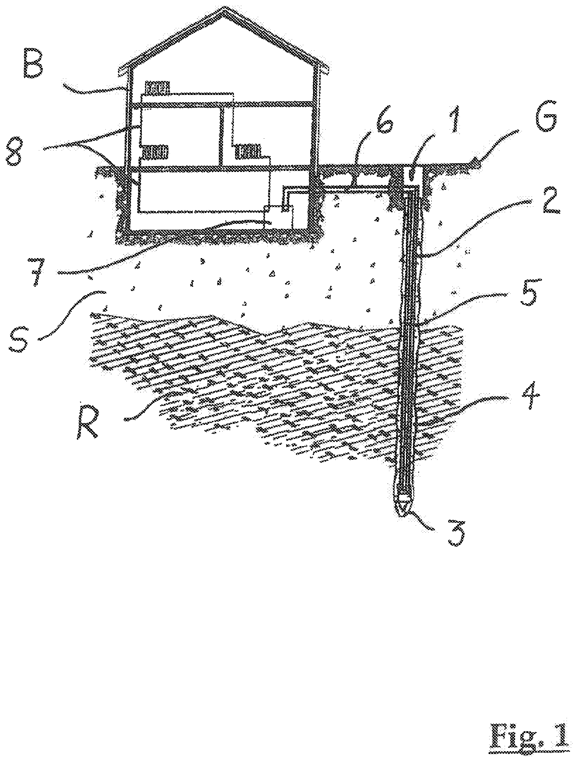

In den Darstellungen in Fig. 1 bis Fig. 5 tragen gleiche Elemente bzw. Bauteile jeweils das gleiche Bezugszeichen.

Die schematische Schnittdarstellung in Fig. 1 zeigt das Prinzip der bekannten Erdwärmesondentechnologie am Beispiel der Beheizung eines Gebäudes B. Dazu ist eine Erdwärmesonde 5, die in eine Erdwärmesondenbohrung 1 von ca. 50 - 350 m eingesetzt ist, über eine Zuleitung 6 mit einer Wärmepumpe 7 verbunden. Die Wärmepumpe 7 versorgt ein Heizungssystem 8 des Gebäudes B mit der erforderlichen Menge Warmwasser. Die in die Bohrung 1 eingesetzte Erdwärmesonde 5 ist ein Wärmetauscher, in dem eine Flüssigkeit zirkuliert. Gemäss dem dargestellten Ausführungsbeispiel weist die Erdwärmesonde 5 vier Sondenrohre aus Polyethylen auf, die paarweise jeweils zu einem U-Rohr zusammengefasst sind und mit der Zuleitung 6 zur Wärmepumpe 7 verbunden sind. Die Sondenrohre weisen beispielsweise Durchmesser von 32 mm oder 40 mm auf. Die Erdwärmesonde 5 wird bis zum Grund 3 der Bohrung vorgeschoben. Der zwischen der Erdwärmesonde 5 und der Bohrungswandung 2 verbleibende Hohlraum wird mit einem Verfüllmaterial 4, das üblicherweise aus einer Mischung aus Bentonit und Zement besteht, kompakt hinterfüllt, um einen guten thermischen Kontakt zwischen den Sondenrohren der Erdwärmesonde 5 und der Bohrungswandung 2 sicherzustellen. Als Verfüllmaterial 4 kommen auch andere Materialien in Frage, die eine ausreichend gute Wärmeübertragung gewährleisten. Beispielsweise ist auch eine Verfahrensvariante bekannt, bei der als Verfüllmaterial Wasser eingesetzt wird. Die in den Sondenrohren zirkulierende Flüssigkeit, meist Wasser mit einem Anteil von 15 - 35% Antigel, entzieht dem Untergrund G Erdwärme und versorgt mit dieser geothermischen Energie die Wärmepumpe 7. Mit der Wärmepumpe 7 wird die Temperatur dann auf das für Heizzwecke erforderliche Niveau angehoben. In Fig. 1 ist auch noch angedeutet, dass sich der Untergrund G meist aus oberflächennäherem weicherem Erdreich S und harten Felsschichten R zusammensetzt. Die Erdwärmesondenbohrung 1 wird bis in die harten Felsschichten R vorgetrieben, da dort die stabilsten, nur von der Bohrungstiefe abhängigen Temperaturverhältnisse anzutreffen sind.

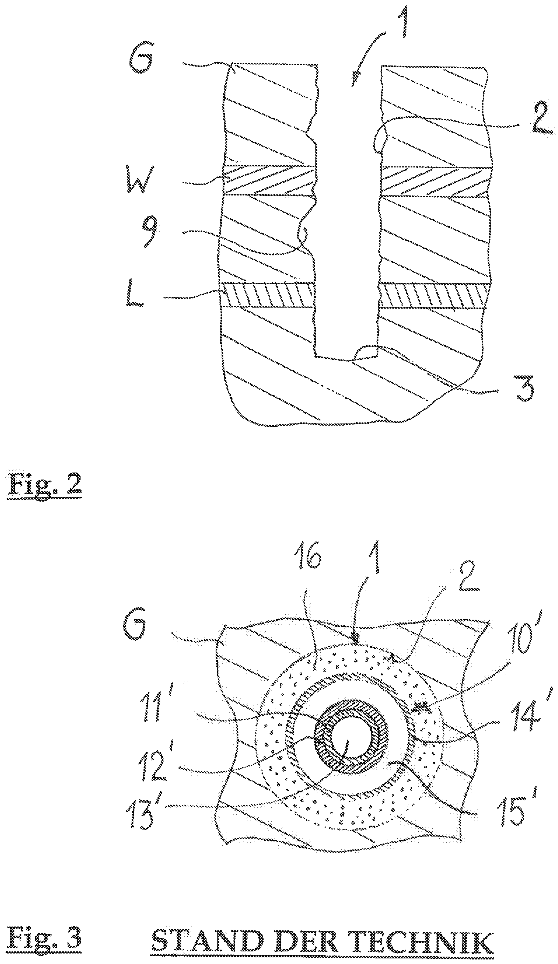

Fig. 2 zeigt schematisch einen Axialschnitt einer Erdwärmesondenbohrung 1. Die Bohrungswandung trägt wiederum das Bezugszeichen 2. Der Bohrlochgrund ist mit dem Bezugszeichen 3 versehen. Der Durchmesser der Erdwärmesondenbohrung 1 beträgt beispielsweise etwa 7,62 cm bis 15,24 cm (3 - 6 Zoll). Der Untergrund ist wiederum mit G bezeichnet. Wäre der Untergrund kompakt, homogen und trocken, dann könnte einfach ein thermisch gedämmtes Zentralrohr in die Erdwärmesondenbohrung 1 abgesenkt werden. Die Wandung des Zentralrohrs und der Fels begrenzen einen Ringspalt, der mit einem Wärmeträgermedium gefüllt sein könnte, das in erwärmtem Zustand durch das gedämmte Zentralrohr zur Oberfläche transportiert werden könnte, um dort die aufgenommene Wärmeenergie über einen Wärmetauscher an eine Wärmepumpe abzugeben. Das kühlere Wärmeträgermedium wird dann wieder in Richtung des Bohrlochgrundes 3 transportiert. In der Realität führt eine Erdwärmesondenbohrung aber nicht durch kompakten Fels, sondern es werden verschiedene Schichten von losem und mehr oder weniger festem Erdreich durchquert, die beispielsweise auch unterschiedliche Wasserhorizonte L, W enthalten, die sich auf Dauer nicht durchmischen dürfen. Beispielsweise kann der Wasserhorizont W verunreinigtes Wasser enthalten, während der Wasserhorizont L sauberes Grundwasser enthält, das als Trinkwasserreserve dient. Die Bohrungswandung 2 weist oft Ausbrüche und Kavitäten 9 auf, die durch Wasserausschwemmungen noch vergrössert werden können. Bei der Montage einer Erdwärmesonde muss daher darauf geachtet werden, dass unterschiedliche Wasserhorizonte zuverlässig voneinander getrennt werden und Ausbrüche und Kavitäten 9 stabilisiert werden, dass sie sich nicht weiter vergrössern können.

Neben den in Fig. 1 angedeuteten Erdwärmesonden mit Paaren von U-Röhren sind aus dem Stand der Technik auch Koaxial-Erdwärmesonden bekannt ist. Die Querschnittsdarstellung in Fig. 3 zeigt einen schematischen Querschnitt der in einer Erdwärmesondenbohrung 1 im Untergrund G montierten Koaxial-Erdwärmesonde 10'. Sie weist ein zentrales Kernrohr 11' auf, das mit einer thermischen Dämmung 12' versehen ist. Das thermisch gedämmte zentrale Kernrohr 11' ist von einem Hüllrohr 14' umgeben. Die Wandung des Hüllrohrs 14' begrenzt einen Ringspalt 15', der sich zwischen der Aussenwandung der Dämmung 12' und der Wandung des Hüllrohrs 14' erstreckt. Ein zwischen der Bohrungswandung 2 und der Aussenwandung des Hüllrohrs 14' verbleibender Ringspalt ist mit einer Verfüllmasse 16, üblicherweise ein Gemisch aus Bentonit und Zement, gefüllt. Die Verfüllmasse hat die Aufgabe, die Bohrlochwandung 2 zu stabilisieren, unterschiedliche Wasserhorizonte zuverlässig voneinander zu trennen und soll für einen möglichst guten Transport der im Untergrund vorhandenen Wärmeenergie zu dem in der Koaxial-Erdwärmesonde 10' zirkulierenden Wärmeträgermedium sorgen. Aus der schematischen Darstellung ist unmittelbar ersichtlich, dass der für das Wärmeträgermedium zur Verfügung stehende Strömungsquerschnitt gegenüber dem eigentlichen Querschnitt der Erdwärmesondenbohrung relativ klein ist, da die Verfüllmasse bis zu einem Drittel des Bohrlochquerschnitts einnimmt. Dies führt im Betrieb der bekannten Koaxial-Erdwärmesonde 10' zu einem erhöhten Druckabfall über die Länge der Sonde und zu einem daraus resultierenden relativ hohen Energieaufwand für die Zirkulation des Wärmeträgermediums. Der Aufwand für die Montage dieser Koaxial-Erdwärmesonde 10' des Stands der Technik ist nicht zuletzt wegen des erforderlichen Injektionsschrittes für die Verfüllmasse 16 relativ hoch.

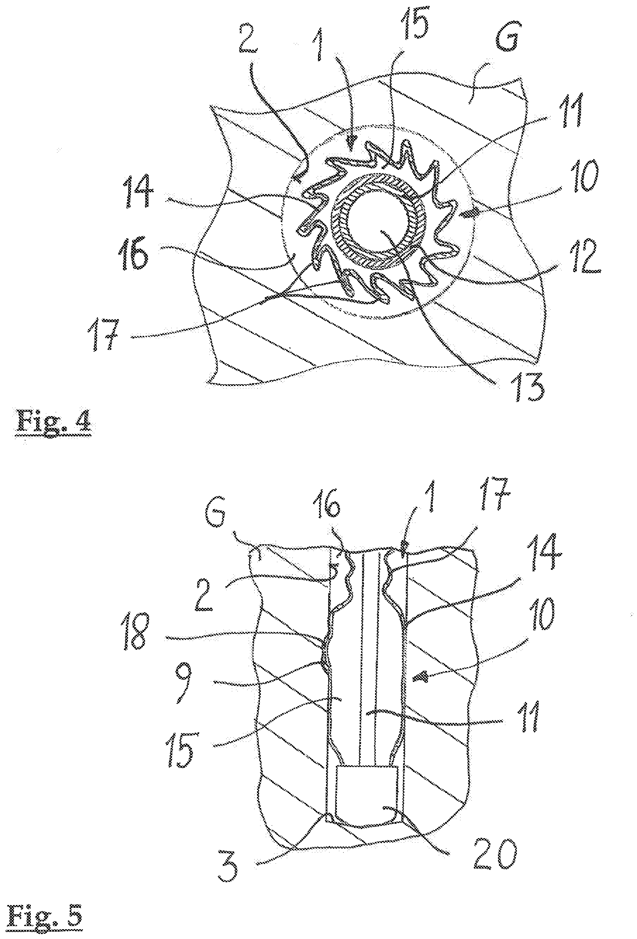

Fig. 4 zeigt eine zu Fig. 3 analoge schematische Querschnittsdarstellung einer Koaxial-Erdwärmesonde gemäss der Erfindung. Gleiche Bauelemente sind jeweils mit den gleichen Bezugszeichen wie in Fig. 3 versehen, jedoch ohne Apostroph "'".
Eine erfindungsgemässe Koaxial-Erdwärmesonde, die gesamthaft mit dem Bezugszeichen 10 versehen ist, ist in eine Erdwärmesondenbohrung 1 abgesenkt. Die Koaxial-Erdwärmesonde 10 weist ein zentrales Kernrohr 11 auf, das mit einer thermischen Dämmung 12 ummantelt ist. Bezugszeichen 14 bezeichnet eine expandierbare schlauchartige Umhüllung, die in Fig. 4 in gefaltetem Zustand gezeigt ist. Die Faltungen sind mit dem Bezugszeichen 17 versehen. Im expandierten Zustand liegt die schlauchartige Umhüllung 14 unmittelbar an der Wandung 2 der Erdwärmesondenbohrung 1 an. Ein vor der Entfaltung zwischen der Umhüllung 14 und der Bohrungswandung 2 existierender Spalt 16 verschwindet bei der Expansion der Umhüllung 14, welche das Hüllrohr der Koaxial-Erdwärmesonde 10 bildet, das ja nun unmittelbar an der Bohrungswandung 2 anliegt. Eine Hinterfüllung des Spalts 16 mit einer Verfüllmasse entfällt. Nachdem die Verfüllmasse entfällt, verbleibt für ein die Koaxial-Erdwärmesonde 10 durchströmendes Wärmeträgermedium eine deutlich grössere Querschnittsfläche als bei den Koaxial-Erdwärmesonden des Stands der Technik. Dadurch kann ein Kernrohr 11 eingesetzt werden, dessen freier Querschnitt 13 einen grösseren Anteil an der Querschnittsfläche der Erdwärmesondenbohrung 1 aufweist. Im expandierten Zustand der schlauchartigen Umhüllung 14 weist natürlich auch der Ringspalt 15 zwischen der thermischen Dämmung und der Umhüllung 14 eine grössere Querschnittsfläche auf als bei den Koaxial-Erdwärmesonden des Stands der Technik.

Die das Hüllrohr der Koaxial-Erdwärmesonde 10 bildende schlauchartige Umhüllung 14 ist mit Vorteil eine Kunststoffverbundfolie und weist, je nach Länge der Koaxial-Erdwärmesonde eine Wandstärke von etwa 3 mm bis 15 mm auf. Eine Wandstärke von 3 mm reicht bei Längen bis ca. 450 m aus, um das Eigengewicht der Kunststoffverbundfolie zu tragen. Bei grösseren Längen der Koaxial-Erdwärmesonde wird entsprechend eine grössere Wandstärke für die schlauchartige Umhüllung gewählt. Die äussere Umhüllung nimmt nur wenig Volumen ein, weist jedoch im expandierten Zustand eine ausreichend grosse Eigenstabilität auf. Die geringe Wandstärke der Kunststoffverbundfolie begünstigt auch den Wärmeübergang vom Untergrund G in das in der Koaxial-Erdwärmesonde 10 zirkulierende Wärmeträgermedium.

Eine Ausführungsvariante der Erfindung sieht vor, dass die Umhüllung 14 eine Armierung aus einem Aluminium-Streckmetall aufweist, auf die beidseitig eine dehnbare Kunststoffmembran aufgebracht ist. Die Kunststoffmembran besteht beispielsweise aus Polyethylen, Latex, Kautschuk oder dergleichen Materialien und ist mikroperforiert. Durch Innendruck deformiert sich das Streckmetall im gewünschten Ausmass und verleiht der Umhüllung 14 die geforderte Stabilität. Eine weitere Ausführungsvariante der Erfindung kann vorsehen, dass die äussere Umhüllung über am zentralen Innenrohr angeordnete, entfaltbare Rippen oder Stege mit dem Innenrohr verbunden ist. Die Rippen oder Stege sind über den Umfang des Innenrohrs und dessen Länge verteilt angeordnet. Sie sind durch einen erhöhten Innendruck entfaltbar und nehmen im entfalteten Zustand eine stabile Endlage ein. Sie sollen die äussere Umhüllung zusätzlich radial abstützen und ein Kollabieren verhindern.

Fig. 5 zeigt einen bohrlochgrundnahen Abschnitt einer Erdwärmesondenbohrung 1 mit einer eingesetzten erfindungsgemäss ausgebildeten Koaxial-Erdwärmesonde 10 und dient zur Erläuterung des Montageverfahrens der Sonde in der Bohrung 1. Nach dem Erstellen der Erdwärmesondenbohrung, die beispielsweise eine Tiefe von etwa 450 m und bis zu 1500m aufweisen kann, wird die erfindungsgemässe Koaxial-Erdwärmesonde 10 eingebracht und bis zum Grund 3 der Bohrung 1 vorgeschoben. Die Koaxial-Erdwärmesonde 10 weist an ihrem dem Bohrlochgrund 3 zugewandten Ende einen Sondenkopf 20 auf, der mit dem thermische isolierten zentralen Kernrohr 11 und mit der expandierbaren schlauchartigen Umhüllung 14 verbunden ist, die während des Absenkens der Koaxial-Erdwärmesonde 10 in gefaltetem Zustand vorliegt. Im Sondenkopf 20 sind Strömungskanäle (nicht dargestellt) vorgesehen, welche das Innenrohr und den Ringspalt zwischen dem Innenrohr 11 und der Umhüllung verbinden. Wie bereits an anderer Stelle erwähnt, kann die Koaxial-Erdwärmesonde 10 als Endlos-Rollmaterial vorliegen, oder in abgelängten Abschnitten bereitgestellt werden, die beim Einbringen in die Erdwärmesondenbohrung flüssigkeitsdicht miteinander verbunden werden. Schliesslich können das thermische isolierte zentrale Kernrohr 11 und die expandierbare schlauchartige Umhüllung 14 auch getrennt voneinander vorliegen. Dabei wird die Umhüllung von einem flachen Endlos-Rollenmaterial gebildet, das erst beim Einbringen des zentralen Kernrohrs mit diesem zusammengeführt wird, wobei die Längskanten der schlauchartigen Umhüllung miteinander flüssigkeitsdicht verbunden werden. Der Sondenkopf 20 erleichtert das Einbringen der Koaxial-Erdwärmesonde 10, indem er diese infolge seines Gewichts nach unten zieht und für eine gestreckte Lage des zentralen Kernrohrs 11 sorgt.

Nachdem der Sondenkopf 20 den Grund der Erdwärmesondenbohrung 1 erreicht hat wird in einer ersten Variante des Montageverfahrens für die Koaxial-Erdwärmesonde der Ringspalt zwischen dem thermisch isolierten zentralen Kernrohr 11 und der gefalteten Umhüllung 14 langsam von oben her mit Wasser gefüllt. Dabei wird die gefaltete Umhüllung 14 von unten her expandiert und eng an die Bohrungswandung 2 gepresst. Durch die Volumenvergrösserung der schlauchartigen Umhüllung 14 wird Wasser, das sich im Zwischenraum 16 zwischen der Umhüllung 14 und der Bohrungswandung 2 befindet, langsam nach oben gedrückt. Weist die Bohrungswandung 2 beispielsweise eine Kavität 9 auf, so dringt die schlauchartige Umhüllung 14 teilweise in diese ein, um sie wenigstens zum Teil mit einer Ausbeulung 18 auszufüllen. Um bei grösseren Kavitäten 9 und Klüften eine Überdehnung oder gar einen Bruch der Umhüllung 14 zu vermeiden, ist die schlauchartige Umhüllung 14 wenigstens bereichsweise ab einer relativen Druckdifferenz von etwa 2 bar bis 3 bar begrenzt durchlässig für Wasser. Sobald dieser Überdruck an der Umhüllung 14 ansteht, tritt das Wasser durch die Umhüllung 14 in die Kavität 9 aus. Kleinere Kavitäten werden auf diese Weise mit Wasser aufgefüllt. Dadurch wird eine weitere Ausbeulung der Umhüllung 14 vermieden. Bei grösseren Kavitäten oder Klüften erfolgt lediglich eine begrenzte Ausbeulung der Umhüllung 14 in die Kavität bzw. Kluft hinein, wodurch diese an den Rändern zuverlässig abgedichtet werden. Die Umhüllung ist zweckmässigerweise derart ausgebildet, dass sie in oberflächennahen Bereichen, die im expandierten Zustand üblicherweise an lockeres Erdreich angrenzen, wasserundurchlässig ausgebildet ist.

Der expandierte Aussendurchmesser der Umhüllung 14 ist etwas grösser gewählt als der Durchmesser der Erdwärmesondenbohrung 1; beispielsweise beträgt der Durchmesserunterschied etwa 3 % bis 10 %. Dadurch weist die schlauchartige Umhüllung 14 nach ihrer vollständiger Füllung mit Wasser immer noch kleine, nach innen weisende Falten auf, die unregelmässig angeordnet sind. Diese Falten bewirken eine zusätzliche Versteifung der Umhüllung 14. Nachdem auch das zentrale Kernrohr 11 vollständig mit Wasser gefüllt ist, wird nach einer Wartezeit von ca. 5 min bis 48 h der Druck auf die Wassersäule im Kernrohr 11 kontinuierlich bis zu einem Überdruck von ca. 12 bar bis 15 bar erhöht und für eine Zeitspanne von etwa 30 s bis 1 1/2 h aufrecht erhalten. Die Wartezeit ist erforderlich, damit allfällige in der Bohrungswandung 2 befindliche kleinere Kavitäten 9 vollständig mit Wasser aus dem Inneren der Umhüllung 14 gefüllt werden und in den Kavitäten enthaltene Luft ausgepresst werden kann. Bei grösseren Kavitäten oder Klüften kommt es lediglich zu einer begrenzten Expansion der Umhüllung in die Kavität oder Kluft hinein. Durch die Druckerhöhung auf die Wassersäule im Kernrohr 11 wird die Umhüllung 14 noch stärker an die Bohrungswandung 2 gepresst. Die immer noch vorhandenen Falten werden teilweise geglättet, teils zusammengepresst. Das Umhüllungsmaterial wird an diesen Stellen gereckt, d.h. plastisch verformt, ohne zu brechen. Dadurch wird die Eigensteifigkeit der das Hüllrohr der Koaxial-Erdwärmesonde 10 bildenden expandierten Umhüllung 14 erhöht. Das inkompressible Wasser in den Kavitäten 9 zwischen der Umhüllung 14 und der Bohrungswandung 2 verhindert eine Überdehnung und Leckagen der Umhüllung 14 an diesen Stellen. Steigt infolge der Einpressung der Umhüllung 14 in die Kavitäten 9 der Druck des dort befindlichen Wassers zu stark an, kann dieses Wasser aus den Kavitäten 9 durch die Umhüllung 14 in den Ringspalt 15 fliessen. Die starke Pressung der Umhüllung 14 an den Rändern der Kavitäten 9 führt zu einer zuverlässigen Abdichtung und verhindert eine vertikale Zirkulation von Grundwasser aus unterschiedlichen wasserführenden Schichten. Die gegen die Bohrungswandung 2 gepresste Umhüllung 14 stabilisiert die Bohrungswandung 2 und verhindert ein weiteres Ausbrechen von Material. Die unmittelbar an der Bohrungswandung 2 anliegende Umhüllung und die immer noch vorhandenen Falten begünstigen den Übergang von Wärmeenergie aus dem Untergrund G in das Wärmeträgermedium. Nachdem die Koaxial-Erdwärmesonde 10 auf die vorstehend geschilderte Weise in der Bohrung montiert worden ist, kann sie mit dem Wärmetauscher der Wärmepumpe verbunden und betrieben werden. Als Wärmeträgermedium in der Koaxial-Erdwärmesonde 10 dient das eingefüllte Wasser. Ein dazwischen geschaltetes Druckgefäss (nicht dargestellt) sorgt dafür, dass in der Koaxialerdwärmesonde stets ein Überdruck von ca. 2 - 3 bar aufrecht erhalten bleibt.

In einer Verfahrensvariante zur Montage einer erfindungsgemäss ausgebildeten Koaxial-Erdwärmesonde 10 wird die zunächst zusammengefaltete schlauchartige Umhüllung 14 mit Pressluft anstatt mit Wasser expandiert. Die eingefaltete schlauchartige Umhüllung 14 wird durch Überdruck auf den vollen Durchmesser aufgeblasen. Die Druckluft wird dazu beispielsweise durch das zentrale Kernrohr 11 zugeführt. Am vorderen Ende des Kernrohrs ist eine Wärmequelle, beispielsweise ein Infrarotstrahler, angebracht. Dieser wird zusammen mit dem Kernrohr 11 vom Bohrlochgrund langsam zur Oberfläche gezogen. Durch die langsam hochgezogene Wärmequelle wird die durch Überdruck expandierte Umhüllung 14 zonenweise erwärmt. Infolge des Überdrucks und der durch die Erwärmung verringerten Zähigkeit des Umhüllungsmaterials tritt plastische Verformung ein. Das Umhüllungsmaterial wird dadurch eng an die Bohrungswandung 2 gepresst und dringt in die kleinen Poren und Ritzen ein. Durch den thermischen Kontakt mit dem kälteren Untergrund kühlt das Umhüllungsmaterial schnell wieder unter seine kritische Fliesstemperatur ab. Die am Vorderende des Kernrohrs angebrachte Wärmequelle wird mit geregelter Geschwindigkeit nach oben gezogen. Um im Bereich grösserer Kavitäten 9 eine übermässige Expansion des Umhüllungsmaterials zu vermeiden, sind in der Umhüllung Sensoren angeordnet, welche das Ausmass der Dehnung der Umhüllung überwachen. Wird ein Grenzwert der Dehnung der Umhüllung 14 erreicht, so wird die Wärmequelle schneller hochgezogen. Dadurch wird die plastische Verformung an der betreffende Zone eingeschränkt. Aussderdem sind grössere Kavitäten 9 und Klüfte vielfach mit Wasser gefüllt. Wasser ist inkompressibel und verhindert dadurch automatisch eine übermässige Ausbeulung der Umhüllung 14. Nach der vollständigen Aufweitung und Umformung der Umhüllung wird das Kernrohr wieder bis zum am Bohrlochgrund verbliebenen Sondenkopf vorgeschoben. Ist die Koaxial-Erdwärmesonde 10 auf diese Weise in der Bohrung 1 montiert worden, kann sie mit dem Wärmeträgermedium, zweckmässigerweise Wasser, gefüllt werden und an den Wärmetauscher und die Wärmepumpe angeschlossen werden. Es kann auch noch ein Druckgefäss dazwischen geschaltet werden, damit in der Koaxialerdwärmesonde stets ein Überdruck von ca. 2 - 3 bar aufrecht erhalten bleibt.

Um das Einbringen der Koaxial-Erdwärmesonde in die Erdwärmesondenbohrung noch weiter zu erleichtern, kann die zusammengefaltete äussere Umhüllung von einer sehr dünnen Folie umgeben sein. Die dünne Folie ist derart ausgebildet, dass sie bei einem relativ geringen Überdruck reisst und dann die Entfaltung der zunächst zusammengefalteten Umhüllung ermöglicht.

Die im Vorstehenden näher beschriebenen Ausführungsvarianten der Koaxial-Erdwärmesonde und die angeführten Verfahrensvarianten zu deren Montage in einer Erdwärmesondenbohrung dienen zur Erläuterung der Erfindung. Keinesfalls sollen dadurch jedoch der allgemeine Erfindungsgedanke eingeschränkt oder äquivalente Ausführungsformen ausgeschlossen werden

## Patentansprüche

1. Koaxial-Erdwärmesonde (10) mit einem zentralen Kernrohr (11) und mit einem expandierbaren Hüllrohr (14), das einen sich vom Kernrohr nach aussen erstreckenden Ringspalt (15) begrenzt, wobei das Kernrohr (11) und der Ringspalt (15) für eine Durchströmung mit einem fliessfähigen Wärmeträgermedium ausgebildet sind, **dadurch gekennzeichnet, dass** das Hüllrohr von einer durch erhöhten Innendruck expandierbaren, schlauchartigen Umhüllung (14) gebildet ist, die das Kernrohr (11) in zusammengefaltetem Zustand umgibt und nach dem Einbringen in die Erdwärmesondenbohrung (1) durch ein mit Überdruck zugeführtes fliessfähiges Medium derart in eine stabile Endform bringbar ist, dass sie im eingebauten Zustand der Sonde (10) unmittelbar an eine Wandung (2) einer Erdwärmesondenbohrung (1) angrenzt.

2. Koaxial-Erdwärmesonde nach Anspruch 1, **dadurch gekennzeichnet, dass** die schlauchartige Umhüllung (14) in eine stabile Endform bringbar ist, in der sie einen Durchmesser aufweist, der grösser ist als der Durchmesser der Erdwärmesondenbohrung (1), für welche die Erdwärmesonde (10) vorgesehen ist.

3. Koaxial-Erdwärmesonde nach Anspruch 1 oder 2, **dadurch gekennzeichnet, dass** das Kernrohr (11) und der Ringspalt (15) für eine Durchströmung mit Wasser als Wärmeträgermedium ausgebildet sind.

4. Koaxial-Erdwärmesonde nach einem der vorangehenden Ansprüche, **dadurch gekennzeichnet, dass** die schlauchartige Umhüllung (14) wenigstens bereichsweise bei Überschreiten eines maximalen relativen Überdrucks gegenüber dem Wärmeträgermedium, insbesondere gegenüber Wasser, begrenzt durchlässig ist.

5. Koaxial-Erdwärmesonde nach Anspruch 4, **dadurch gekennzeichnet, dass** der maximale relative Überdruck ca. 2 bar bis 3 bar beträgt.

6. Koaxial-Erdwärmesonde nach Anspruch 4 oder 5, **dadurch gekennzeichnet, dass** ein oberflächennaher Bereich der schlauchartigen Umhüllung, der im montierten Zustand an lockeres Erdreich angrenzt, wasserundurchlässig ausgebildet ist.

7. Koaxial-Erdwärmesonde nach einem der vorangehenden Ansprüche, **dadurch gekennzeichnet, dass** das zentrale Kernrohr (11) und die expandierbare Umhüllung (14) integral miteinander verbunden sind und als Endlos-Rollmaterial vorliegen und für das Einbringen in die Erdwärmesondenbohrung (1) in der gewünschten Länge von einer Trommel abrollbar sind.

8. Koaxial-Erdwärmesonde nach einem der Ansprüche 1 bis 6, **dadurch gekennzeichnet, dass** das zentrale Kernrohr (11) und die integral damit verbundene expandierbare Umhüllung (14) in abgelängten Abschnitten vorliegen und die Abschnitte beim Einbringen in die Erdwärmesondenbohrung (1) flüssigkeitsdicht miteinander verbindbar sind.

9. Koaxial-Erdwärmesonde nach einem der Ansprüche 1 bis 6, **dadurch gekennzeichnet, dass** das zentrale Kernrohr (11) und die expandierbare Umhüllung (14) getrennt voneinander vorliegen, wobei die expandierbare Umhüllung (14) von einem flachen Endlos-Rollenmaterial gebildet wird und erst beim Einbringen des zentralen Kernrohrs (11) mit diesem zusammenführbar ist, wobei die Längskanten der Umhüllung (14) miteinander flüssigkeitsdicht verbindbar sind.

10. Koaxial-Erdwärmesonde nach Anspruch 8 oder 9, **dadurch gekennzeichnet, dass** die flüssigkeitsdichte Verbindung durch Vernähen und/oder Verschweissen erstellbar ist.

11. Koaxial-Erdwärmesonde nach einem der vorangehenden Ansprüche, **dadurch gekennzeichnet, dass** die expandierbare Umhüllung(14) von einer Kunststoffverbundfolie gebildet ist, die eine Wandstärke von etwa 3 mm bis etwa 15 mm aufweist.

12. Koaxial-Erdwärmesonde nach einem der vorangehenden Ansprüche, **dadurch gekennzeichnet, dass** die Umhüllung eine Armierung aus einem Aluminium-Streckmetall aufweist, auf die beidseitig eine dehnbare Kunststoffmembran aufgebracht ist, welche bevorzugt aus Polyethylen, Latex, Kautschuk oder dergleichen Materialien besteht und ist mikroperforiert ist.

13. Koaxial-Erdwärmesonde nach einem der vorangehenden Ansprüche, **dadurch gekennzeichnet, dass** das zentrale Kernrohr (11) mit einer thermisch isolierenden Ummantelung (12) versehen ist.

14. Verfahren zur Montage einer Koaxial-Erdwärmesonde gemäss einem der Ansprüche 1 bis 13 im Erdreich, bei dem zunächst mit einer Bohrvorrichtung eine Erwärmesondenbohrung (1) erstellt wird und danach eine Koaxial-Erdwärmesonde (10) in die vorbereitete Bohrung (1) abgesenkt wird, **dadurch gekennzeichnet, dass** nach dem Einbringen der Koaxial-Erdwärmesonde (10) eine zunächst zusammengefaltete, durch erhöhten Innendruck expandierbare, schlauchartige Umhüllung (14), welche ein Hüllrohr für ein zentrales Kernrohr (11) der Koaxial-Erdwärmesonde (10) bildet, durch ein mit Überdruck in einen Ringspalt (15) zwischen dem zentralen Kernrohr (11) und dem Hüllrohr zugeführtes fliessfähiges Medium derart in eine stabile Endform gebracht wird, dass sie im eingebauten Zustand der Sonde (10) unmittelbar an eine Wandung (2) einer Erdwärmesondenbohrung (1) angrenzt.

15. Verfahren nach Anspruch 14, **dadurch gekennzeichnet, dass** die Expansion der zusammengefalteten schlauchartigen Umhüllung (14) der Koaxial-Erdwärmesonde mit Pressluft erfolgt, die vorzugsweise durch das zentrale Kernrohr (11) der Sonde zugeführt wird, und am zentralen Kernrohr (11) eine regelbare Wärmequelle, vorzugsweise ein Infrarotstrahler, angeordnet ist, der mit regelbarer Geschwindigkeit vom Bohrlochgrund (3) bis zur Oberfläche verschiebbar ist, um die expandierte Umhüllung (14) kurzzeitig zonenweise zu erwärmen.

16. Verfahren nach Anspruch 15, **dadurch gekennzeichnet, dass** in der expandierbaren Umhüllung (14) Sensoren für die Messung der zonenweisen Dehnung angeordnet sind und die Geschwindigkeit der Verschiebung der Wärmequelle in Abhängigkeit von der gemessenen Dehnung des Umhüllungsmaterials erfolgt.

17. Verfahren nach Anspruch 14, **dadurch gekennzeichnet, dass** die Expansion der zusammengefalteten Umhüllung (14) der Koaxial-Erdwärmesonde (10) mit Wasser erfolgt, das von oben her in den Ringspalt (15) zwischen dem Kernrohr (11) und der gefalteten Umhüllung (14) einbracht wird.

18. Verfahren nach Anspruch 17, **dadurch gekennzeichnet, dass** nach dem vollständigen Füllen des zentralen Kernrohrs (11) bis zur Oberfläche und einer Wartezeit von etwa 5 min bis 48 h der Druck auf die Wassersäule im zentralen Kernrohr (11) kontinuierlich oder stufenweise bis zu einem Überdruck von etwa 12 bar bis etwa 15 bar erhöht und für eine Zeitspanne von etwa 30 s bis 1 ½ h in der Koaxial-Erdwärmesonde (10) aufrecht erhalten wird.

19. Betrieb einer Koaxial-Erdwärmesonde (10) gemäss einem der Ansprüche 1 bis 13 mit Wasser als Wärmeträgermedium.

## Claims

1. Coaxial ground heat exchanger (10) having a central core tube (11) and having an expandable cladding tube (14) which delimits an annular gap (15) extending outwards from the core tube, wherein the core tube (11) and the annular gap (15) are formed for a throughflow with a flowable heat carrier medium,
**characterized in that** the cladding tube is formed by a hose-like cladding (14) which is expandable by way of increased inner pressure, said cladding surrounding the core tube (11) in a folded-together state and, following the introduction into the ground heat exchanger bore (1), being able to be brought into a stable final form by way of a flowable medium, fed with positive pressure, such that, in the installed state of the probe (10), it directly abuts a wall (2) of a ground heat exchanger bore (1).

2. Coaxial ground heat exchanger according to Claim 1, **characterized in that** the hose-like cladding (14) is able to be brought into a stable final form in which it has a diameter which is greater than the diameter of the ground heat exchanger bore (1) for which the ground heat exchanger (10) is intended.

3. Coaxial ground heat exchanger according to Claim 1 or 2, **characterized in that** the core tube (11) and the annular gap (15) are formed for a throughflow with water as a heat carrier medium.

4. Coaxial ground heat exchanger according to one of the preceding claims, **characterized in that** the hose-like cladding (14) is, at least regionally, permeable to a limited extent to the heat carrier medium, in particular to water, in the case of a maximum relative positive pressure being exceeded.

5. Coaxial ground heat exchanger according to Claim 4, **characterized in that** the maximum relative positive pressure is approximately 2 bar to 3 bar.

6. Coaxial ground heat exchanger according to Claim 4 or 5, **characterized in that** a region of the hose-like cladding which is close to the surface and which, in the assembled state, abuts loose earth is formed to be impermeable to water.

7. Coaxial ground heat exchanger according to one of the preceding claims, **characterized in that** the central core tube (11) and the expandable cladding (14) are integrally connected to one another and are available as endless rolling material and, for the introduction into the ground heat exchanger bore (1), may be unrolled from a drum to the desired length.

8. Coaxial ground heat exchanger according to one of Claims 1 to 6, **characterized in that** the central core tube (11) and the expandable cladding (14) integrally connected thereto are available in sections which are cut to length, and the sections may be connected to one another in a liquid-tight manner when being introduced into the ground heat exchanger bore (1).

9. Coaxial ground heat exchanger according to one of Claims 1 to 6, **characterized in that** the central core tube (11) and the expandable cladding (14) are available eparately from one another, wherein the expandable cladding (14) is formed by a planar endless rolling material and, only when the central core tube (11) is introduced, may be brought together therewith, wherein the longitudinal edges of the cladding (14) may be connected to one another in a liquid-tight manner.

10. Coaxial ground heat exchanger according to Claim 8 or 9, **characterized in that** the liquid-tight connection is able to be established by stitching and/or fusion.

11. Coaxial ground heat exchanger according to one of the preceding claims, **characterized in that** the expandable cladding (14) is formed by a plastic composite film which has a wall thickness of approximately 3 mm to approximately 15 mm.

12. Coaxial ground heat exchanger according to one of the preceding claims, **characterized in that** the cladding has an armouring composed of an expanded aluminium metal, to which an expandable plastic diaphragm is applied on both sides, which diaphragm preferably consists of polyethylene, latex, rubber or suchlike materials and is microperforated.

13. Coaxial ground heat exchanger according to one of the preceding claims, **characterized in that** the central core tube (11) is provided with a thermally insulating jacket (12).

14. Method for installing in the ground a coaxial ground heat exchanger according to one of Claims 1 to 13, in which method firstly a ground heat exchanger bore (1) is produced using a boring device and subsequently a coaxial ground heat exchanger (10) is lowered into the prepared bore (1), **characterized in that**, following the introduction of the coaxial ground heat exchanger (10), an initially folded-together hose-like cladding (14), which is expandable by way of increased inner pressure and which forms a cladding tube for a central core tube (11) of the coaxial ground heat exchanger (10), is brought into a stable final form by way of a flowable medium, fed with positive pressure into an annular gap (15) between the central core tube (11) and the cladding tube, such that, in the installed state of the probe (10), it directly abuts a wall (2) of a ground heat exchanger (1).

15. Method according to Claim 14, **characterized in that** the expansion of the folded-together hose-like cladding (14) of the coaxial ground heat exchanger is realized with compressed air which is preferably fed through the central core tube (11) of the probe, and there is arranged at the central core tube (11) a regulable heat source, preferably an infra-red emitter, which is displaceable with regulable speed from the borehole base (3) to the surface in order to heat the expanded cladding (14) for a short time zone by zone.

16. Method according to Claim 15, **characterized in that** sensors for the measurement of the zone-by-zone expansion are arranged in the expandable cladding (14), and the speed of displacement of the heat source is realized in dependence on the measured expansion of the cladding material.

17. Method according to Claim 14, **characterized in that** the expansion of the folded-together cladding (14) of the coaxial ground heat exchanger (10) is realized with water which is introduced from above into the annular gap (15) between the core tube (11) and the folded cladding (14).

18. Method according to Claim 17, **characterized in that**, following the complete filling of the central core tube (11) up to the surface and a waiting time of approximately 5 min to 48 h, the pressure on the water column in the central core tube (11) is increased continuously or in steps up to a positive pressure of approximately 12 bar to approximately 15 bar and is maintained in the coaxial ground heat exchanger (10) for a time period of approximately 30 s to 1 ½ h.

19. Operation of a coaxial ground heat exchanger (10) according to one of Claims 1 to 13, using water as a heat carrier medium.

## Revendications

1. Sonde géothermique coaxiale (10) comprenant un tube intérieur (11) central et un tube de gainage (14) expansible qui délimite un espace annulaire (15) s'étendant vers l'extérieur à partir du tube intérieur, sachant que le tube intérieur (11) et l'espace annulaire (15) sont conçus pour être traversés par un fluide caloporteur pouvant s'écouler, **caractérisée en ce que** le tube de gainage est constitué d'une gaine (14) en forme de tuyau souple pouvant être dilatée par une pression interne accrue, qui, à l'état replié, entoure le tube intérieur (11) et, après introduction dans le forage de sonde géothermique (1), peut être amenée à une forme finale stable par un fluide pouvant s'écouler, amené avec une surpression, de telle sorte qu'à l'état installé de la sonde (10) elle soit directement adjacente à une paroi (2) d'un forage de sonde géothermique (1).

2. Sonde géothermique coaxiale selon la revendication 1, **caractérisée en ce que** la gaine (14) en forme de tuyau souple peut être amenée à une forme finale stable, dans laquelle elle présente un diamètre qui est supérieur au diamètre du forage de sonde géothermique (1), pour lequel est prévue la sonde géothermique (10).

3. Sonde géothermique coaxiale selon la revendication 1 ou 2, **caractérisée en ce que** le tube intérieur (11) et l'espace annulaire (15) sont conçus pour être traversés par de l'eau en tant que fluide caloporteur.

4. Sonde géothermique coaxiale selon l'une des revendications précédentes, **caractérisée en ce que**, en cas de dépassement d'une surpression relative maximale, la gaine (14) en forme de tuyau souple est perméable de façon limitée, au moins dans certaines zones, au fluide caloporteur, notamment à l'eau.

5. Sonde géothermique coaxiale selon la revendication 4, **caractérisée en ce que** la surpression relative maximale est d'environ 2 bars à 3 bars.

6. Sonde géothermique coaxiale selon la revendication 4 ou 5, **caractérisée en ce qu'**une partie de la gaine en forme de tuyau souple qui se situe à proximité de la surface et, à l'état installé, est adjacente à du terrain meuble, est réalisée de manière imperméable à l'eau.

7. Sonde géothermique coaxiale selon l'une des revendications précédentes, **caractérisée en ce que** le tube intérieur (11) central et la gaine (14) expansible sont reliés d'une seule pièce l'un à l'autre et se présentent sous la forme d'un matériau à dérouler sans fin et peuvent être déroulés de la longueur souhaitée, à partir d'un tambour, en vue de l'introduction dans le forage de sonde géothermique (1).

8. Sonde géothermique coaxiale selon l'une des revendications 1 à 6, **caractérisée en ce que** le tube intérieur (11) central et la gaine (14) expansible reliée d'une seule pièce à celui-ci se présentent sous forme de tronçons coupés à longueur, et que, lors de l'introduction dans le forage de sonde géothermique (1), les tronçons peuvent être reliés entre eux de manière étanche aux liquides.

9. Sonde géothermique coaxiale selon l'une des revendications 1 à 6, **caractérisée en ce que** le tube intérieur (11) central et la gaine (14) expansible sont présents en étant séparés l'un de l'autre, sachant que la gaine (14) expansible est constituée d'un matériau plat sans fin à dérouler et n'est réunie avec le tube intérieur (11) central que lors de la mise en place de ce dernier, les bords longitudinaux de la gaine (14) pouvant être reliés entre eux de façon étanche aux liquides.

10. Sonde géothermique coaxiale selon la revendication 8 ou 9, **caractérisée en ce que** la liaison étanche aux liquides peut être réalisée par couture et/ou par soudure.

11. Sonde géothermique coaxiale selon l'une des revendications précédentes, **caractérisée en ce que** la gaine (14) expansible est constituée d'un film composite en matière plastique qui présente une épaisseur de paroi d'environ 3 mm jusqu'à environ 15 mm.

12. Sonde géothermique coaxiale selon l'une des revendications précédentes, **caractérisée en ce que** la gaine présente une armature constituée d'un métal déployé en aluminium, sur les deux faces de laquelle est appliquée une membrane en matière plastique extensible qui se compose de préférence de polyéthylène, de latex, de caoutchouc ou de matériaux analogues et qui est microperforée.

13. Sonde géothermique coaxiale selon l'une des revendications précédentes, **caractérisée en ce que** le tube intérieur (11) central est pourvu d'une enveloppe (12) thermiquement isolante.

14. Procédé de montage d'une sonde géothermique coaxiale selon l'une des revendications 1 à 13 dans le sol, selon lequel on réalise d'abord un forage de sonde géothermique (1), à l'aide d'un dispositif de forage, puis on fait descendre une sonde géothermique coaxiale (10) dans le forage (1) préparé, **caractérisé en ce que**, après la mise en place de la sonde géothermique coaxiale (10), on amène une gaine (14) en forme de tuyau souple, qui est d'abord pliée et peut être dilatée sous l'effet d'une pression interne accrue et qui constitue un tube de gainage pour un tube intérieur (11) central de la sonde géothermique coaxiale (10), à une forme finale stable, à l'aide d'un fluide pouvant s'écouler, introduit avec une surpression dans un espace annulaire (15) entre le tube intérieur (11) central et le tube de gainage, de telle sorte que, à l'état installé de la sonde (10), elle soit immédiatement adjacente à une paroi (2) d'un forage de sonde géothermique (1).

15. Procédé selon la revendication 14, **caractérisé en ce que** la dilatation de la gaine (14) en forme de tuyau souple repliée de la sonde géothermique coaxiale (10) est réalisée avec de l'air comprimé qui est amené de préférence à travers le tube intérieur (11) central de la sonde, et qu'il est prévu sur le tube intérieur (11) central, une source de chaleur réglable, de préférence un émetteur de rayons infrarouges qui peut être déplacé avec une vitesse réglable depuis le fond du forage (3) jusqu'à la surface, afin de chauffer temporairement des zones de la gaine (14) dilatée.

16. Procédé selon la revendication 15, **caractérisé en ce que** dans la gaine (14) expansible, il est prévu des capteurs qui sont destinés à mesurer la dilatation par zones, et que la vitesse du déplacement de la source de chaleur est fonction de la dilatation mesurée du matériau de la gaine.

17. Procédé selon la revendication 14, **caractérisé en ce que** la dilatation de la gaine (14) repliée de la sonde géothermique coaxiale (10) est réalisée avec de l'eau qui est introduite d'en haut dans l'espace annulaire (15) entre le tube intérieur (11) et la gaine (14) repliée.

18. Procédé selon la revendication 17, **caractérisé en ce que**, après le remplissage complet du tube intérieur (11) central, jusqu'à la surface, et après un temps d'attente d'environ 5 min à 48 h, la pression exercée sur la colonne d'eau dans le tube intérieur (11) central est augmentée de façon continue ou par paliers, jusqu'à atteindre une surpression d'environ 12 bars à environ 15 bars, et est maintenue pendant un laps de temps d'environ 30 s à 1,5 h dans la sonde géothermique coaxiale (1).

19. Utilisation d'une sonde géothermique coaxiale (1) selon l'une des revendications 1 à 13, avec de l'eau en tant que fluide caloporteur.
